# EUROPÄISCHE PATENTSCHRIFT

(11) **EP 1 385 904 B1**
(45) Veröffentlichungstag und Bekanntmachung des Hinweises auf die Patenterteilung: **11.04.2007**
(21) Anmeldenummer: 02727531.2
(22) Anmeldetag: 05.04.2002
(51) Int. Cl.: C08K 7/22, C08L 81/00

(54) **DICHTMASSE NIEDRIGER DICHTE, GRUNDMASSE UND VERFAHREN ZU IHRER HERSTELLUNG SOWIE IHRE VERWENDUNG**
LOW-DENSITY SEALING MASS, GROUND MASS AND METHOD FOR PRODUCING THE SAME AND THE USE THEREOF
MASSE D'ETANCHEITE DE FAIBLE DENSITE, MASSE PRIMAIRE CORRESPONDANTE, SON PROCEDE DE PRODUCTION ET SON UTILISATION

(30) Priorität: 06.04.2001 DE 10117251
(43) Veröffentlichungstag der Anmeldung: 04.02.2004
(73) Patentinhaber: Chemetall GmbH, 60487 Frankfurt (DE)
(72) Erfinder: BONS, Peter, 61203 Reichelsheim (DE); BUROCK, Heinz, 65527 Niedernhausen (DE); DIEZ, Francisco, 64546 Moerfelden-Walldorf (DE); PAUL, Andrea, 63533 Mainhausen (DE); DIEHL, Heiko, 67487 Sankt Martin (DE)
(74) Vertreter: Uppena, Franz
(86) Internationale Anmeldenummer: PCT/EP2002/003815
(87) Internationale Veröffentlichungsnummer: WO 2002/081560

(56) Entgegenhaltungen:
- EP-A- 0 268 837
- WO-A-98/39365
- US-A- 5 663 219

## Beschreibung

Die Erfindung betrifft eine Dichtmasse niedriger Dichte und erhöhter Zugfestigkeit auf der Basis Schwefel enthaltender Polymere sowie eine zugehörige Grundmasse und ein Verfahren zu ihrer Herstellung.

Insbesondere soll die Dichtmasse der Erfindung zum Verbinden bzw. Verkleben von Teilen oder/und Abdichten bzw. Verfüllen von Hohl- bzw. Zwischenräumen dienen. Dies ist vor allem für die Luft- und Raumfahrt von Interesse, aber auch überall dort, wo aufgrund einer größeren Menge von Dichtmassen auf das eingesetzte Gewicht, also auf die Dichte auch der Dichtmassen besonders geachtet werden muß wie z.B. bei Landfahrzeugen.

Dichtmassen werden heute für die unterschiedlichsten Zwecke eingesetzt. Sie dienen insbesondere zum Abdichten von Konstruktionselementen, zum Aufkleben z.B. von Blechen auf vorhandenen Strukturen wie z.B. Segmenten eines Flugzeugs bzw. zum Korrosionsschutz an Stellen, wo z.B. im Bereich von Bohrungen die Korrosionsschutzschichten der metallischen Elemente verletzt oder entfernt werden und können vorübergehend eine tragende Funktion z.B. während des Transports von im Aufbau befindlichen Strukturen übernehmen, die nachträglich noch mit dauerhaften tragenden Verbindungselementen ausgestattet werden.

Es sind grundsätzlich zwei Verfahrensvarianten möglich, um Dichtmassen geringer Dichte herzustellen: Entweder werden Hohlfüllkörper eingesetzt, die aufgrund eines Gas gefüllten Hohlraumes eine sehr geringe Dichte von ihrer Herstellung aus aufweisen. Oder es können Füllstoffe in kompakter Form zugesetzt werden, die aufgrund ihrer geringen Dichte im Vergleich zu der Dichte der anderen Bestandteile wie z.B. anorganischer Füllstoffe der Dichtmasse besonders leicht sind und daher helfen, die Dichte insgesamt abzusenken. Die Herstellung der Leichtdichtmassen hat jedoch nach Kenntnis der Anmelderin ihre Grenzen gefunden bei minimal 1,30 g/cm³, da schon das Grundpolymer eine Dichte im Bereich von 1,0 bis 1,3 g/cm³ aufweist und da die bislang eingesetzten Füllstoffe eine Dichte etwa im Bereich von 2 bis 4 g/cm³ besitzen.

Besondere Anforderungen werden heute an Dichtmassen für die Herstellung und Instandhaltung von Luft- und Raumfahrzeugen gestellt: Dabei stehen aufgrund der Einsatzgebiete Abdichtung der Kraftstofftanks, Korrosionsschutz, aerodynamische Glättung und Abdichtung des Druckrumpfes die Elastizität über einen weiten Temperaturbereich, die Beständigkeit gegen verschiedene Medien wie z.B. Treibstoff, Hydraulikflüssigkeit, Kondenswasser und Enteisungstlüssigkeit und eine gute Dicht- und Haftwirkung auf verschiedensten Substraten im Vordergrund.

Außerdem ist es bei Zwischenlagendichtmassen gewünscht, dass derartige Dichtmassen keine Hohlkörper und keine Hohlräume aufweisen.

Für den Bau eines Linienflugzeugs kann davon ausgegangen werden, dass ca. 1000 bis 2000 kg Dichtmassen eingesetzt werden. Falls daher die Dichte dieser Dichtmassen um z.B. 10 bis 30 % gesenkt werden könnte, würde dies eine spürbare Gewichtsverringerung ausmachen; z.B. von einer Dichte von ca. 1,5 g/cm³ auf ca. 1,28 g/cm³ bzw. teilweise auch auf ca. 1,1 g/cm³.

US 5,663,219 lehrt eine Dichtmassenzusammensetzung auf Basis Polysulfid, bei der die Dichtmasse eine Dichte im Bereich von 1,0 bis 1,3 g/cm³ und eine Schälfestigkeit im Bereich über 17 pounds per linear inch aufweisen soll. Diese Schrift führt unter den Beispielen nur einmal eine Dichte unter 1,3 g/cm³ auf, nämlich 1,1 g/cm³ bei Beispiel 1, nennt jedoch hierzu keine weiteren mechanischen Kenndaten. Aufgrund der übrigen Daten und Kenntnisse der Formulierungen wird angenommen, dass die Schälfestigkeit dieser Dichtmasse eher gering ist. Der beste angegebene Mittelwert der Schälfestigkeit, der zu Beispiel 10 angegeben ist, beträgt 28,3 pounds per linear inch (≡ 124 N/25mm) Es werden hierzu keine Zugfestigkeitsdaten mitgeteilt.

WO 98/39365 A2 beschreibt die Optimierung der Rohstoffe von Polythioether-Polymeren. Die angeführten Füllstoffe weisen eine Rohdichte etwa im Bereich von 1,8 bis 3,6 g/cm² auf. Die Grundmassen enthalten nur ein einziges Polymer, das gegebenenfalls modifiziert wird.

EP 0 268 837 A2 betrifft ein Verfahren zum Abdichten eines Lagerbehälters mit einer flüssigen polymeren Dichtungsmasse auf Basis eines polymeren Thioethers mit Mercaptan-Endgruppen zusammen mit einem Aushärtungsmittel. Die Grundmassen enthalten langkettige verzweigte Polymere.

Es bestand daher die Aufgabe, eine Dichtmasse von möglichst niedriger Dichte, aber auch gleichzeitig von guten mechanischen Eigenschaften bzw. Herstellverfahren von diesen Dichtmassen vorzuschlagen, die möglichst einfach und mit möglichst preisgünstigen Polymeren herstellbar sind sowie vielseitig verwendbar sind. Vor allem sollen diese Dichtmassen aber auch hervorragend für den Einsatz in der Luft- und Raumfahrt geeignet sein.

Die Aufgabe wird gelöst mit einer Dichtmasse niedriger Dichte und erhöhter Zugfestigkeit auf Basis Schwefel enthaltender Polymere gemäß Anspruch 11, die aus einer Grundmasse nach einem der Ansprüche 1 bis 10 und unter Anmischen mit Härter hergestellt ist und die dadurch gekennzeichnet ist, dass sie nach dem Aushärten eine Dichte von nicht mehr als 1,3 g/cm³ bestimmt nach ISO 2781, eine Zugfestigkeit von mindestens 1,9 N/mm² bestimmt nach ISO 37 und eine Schälfestigkeit (Peel) bestimmt nach AITM 2-0013 mit Edelstahldrahtgewebe von mindestens 125 N/25mm aufweist.

Im folgenden wird der Begriff Dichtmasse im Sinne dieser Erfindung teilweise auch so eingesetzt, dass er neben der ausgehärteten Dichtmasse auch - aus Gründen der sprachlichen Vereinfachung - den Begriff der Grundmasse und die mit dem Härter (z.B. auf Basis von Mangandioxid mit Beschleuniger, Netzmittel usw.) angemischte Grundmasse umfaßt. Der Begriff Grundmasse bezeichnet ein Gemisch, das nach dem Anmischen mit dem Härter und nach dem Aushärten mit dem Härter üblicherweise als Dichtmasse verstanden wird. Meistens wird ein Gehalt an Härter im Verhältnis zum Basispolymer im Bereich von 5 : 100 bis 15 : 100 verwendet.

Die Grundmasse umfaßt das Basispolymer der erfindungsgemäßen Dichtmasse, in das die weiteren Komponenten eingemischt werden bzw: sind. Der Anteil des Basispolymers an der gesamten Dichtmasse beträgt üblicherweise 50 bis 85 Gew.-%, vorzugsweise 55 bis 82 Gew.-%, besonders bevorzugt 62 bis 78 Gew.-%. Es ist dem Basispolymer ein höherer Anteil an Füllstoffen oder/und Hohlfüllkörper zuzugeben, um einerseits die Dichte möglichst abzusenken und andererseits möglichst hohe mechanische Eigenschaften einzustellen. Das Basispolymer hat meistens eine Dichte im Bereich von 1,0 bis 1,4 g/cm³, bei dem Basispolymer bevorzugt etwa von 1,29 g/cm³.

Überraschenderweise wurde gefunden, dass mindestens ein langkettiges lineares Polysulfid mit einer Kettenlänge im Bereich etwa von 1500 bis 5000 g/Mol, insbesondere im Bereich von etwa 2000 bis 4500 g/Mol (wie z.B. LP 541 der Fa. Rohm & Haas oder G 10 der Fa. Akzo Nobel) in Kombination mit mindestens einem kurzkettigen verzweigten Polysulfid mit einer Kettenlänge im Bereich etwa von 500 bis 2000 g/Mol, vorzugsweise im Bereich etwa von 800 bis 1500 g/Mol, mit einem Gehalt trifunktioneller oder/und höher-funktioneller Moleküle - ein Gehalt trifunktioneller Moleküle bevorzugt im Bereich von 0,1 bis 5 Mol-% und insbesondere im Bereich von 0,5 bis 2 Mol-% - (wie z.B. LP 3, LP 33 der Fa. Rohm & Haas oder G 44, G 4 der Fa. Akzo Nobel) und gegebenenfalls mit mindestens einem mehrfach funktionellen Vernetzer mit der Anzahl der funktionellen Gruppen n ≥ 3 besonders gute mechanische Eigenschaften erbringt. Vorzugsweise ist n = 3 oder/und 4, kann aber grundsätzlich auch Werte von n = 3, 4, 5, 6, 7 oder/und 8, selten Werte für n größer als 8, annehmen. Der mehrfach funktionelle Vernetzer kann z.B. wie im Fall des Pentaerythritol-Tetrakis-3-Mercaptopropionat, des Trimethylolpropantrimercaptopropionat oder des Trimethylolpropantrimercaptoacetat der Fa. Bruno Bock mercaptofunktionell oder wie im Fall des Triglycidylpropylaminophenol TGPAP der Fa. Shell, des Araldit^{®} MY 0500 sowie des Araldit^{®} XU MY 0505 der Fa. Ciba oder des DEN 431 der Fa. Dow epoxyfunktionell sein. Der Gehalt an Vernetzern kann bis 5 Gew.-% betragen, vorzugsweise 0,1 bis 3 Gew.-%, besonders bevorzugt nicht mehr als 0,5 Gew.-%. Die chemischen Varianten des Basispolymers sowie des Vernetzers sind dem Fachmann grundsätzlich bekannt.

Außerdem kann die Grundmasse mindestens einen Adhäsionspromotor enthalten. Er dient der Einbindung der Füllstoffe und Hohlfüllstoffe in das Polymer sowie der Haftvermittlung zum Substrat. Er ist, soweit er enthalten ist, üblicherweise in einer Gesamtmenge von 0,1 bis 8 Gew.-%.

Ferner kann die Grundmasse mindestens einen mineralischen Füllstoff enthalten. Das kann ein Füllstoff z.B. auf Basis von Aluminiumoxid, Aluminiumhydroxid, Kreide, Kieselsäure, Silicaten oder/und Sulfaten sein. Ihr Gesamtgehalt kann zwischen 0 und 49 Gew.-% variieren, vorzugsweise 1 bis 40 Gew.-%, besonders bevorzugt mindestens 2 Gew.-% bzw. bis zu 30 Gew.-%, ganz besonders bevorzugt mindestens 5 Gew.-% bzw. bis zu 25 Gew.-%.

Ferner kann bei Bedarf insbesondere mindestens je ein rheologisches Additiv zum Einstellen z.B. der Thixotropie oder/und der Verlaufseigenschaften, ein Biozid, ein Korrosionsinhibitor bzw. ein andersartig wirkendes Additiv enthalten sein.

Außerdem wurde die Aufgabe gelöst mit einer Grundmasse auf Basis Schwefel enthaltender Polymere zur Herstellung einer erfindungsgemäßen Dichtmasse, wobei die Grundmasse als Basispolymer mindestens ein langkettiges lineares Polysulfid mit einer Kettenlänge im Bereich etwa von 1500 bis 5000 g/Mol in Kombination mit mindestens einem kurzkettigen verzweigten Polysulfid mit einer Kettenlänge im Bereich etwa von 500 bis 2000 g/Mol, das einen Gehalt trifunktioneller oder/und höher-funktioneller Moleküle aufweist, und gegebenenfalls mit mindestens einem mehrfach funktionellen Vernetzer mit der Anzahl der funktionellen Gruppen n ≥ 3 aufweist, jedoch keine epoxidierten Polysulfide, sowie einen Anteil an Hohlfüllkörpern oder/und an leichtem polymeren festigkeitssteigerndem Füllstoff wie z.B. Polyamid, Polyethylen, Polypropylen enthält.

Statt des Gehalts an trifunktionellen Molekülen können grundsätzlich auch höherfunktionelle Moleküle gleichzeitig oder alternativ insbesondere bis zu n = 8 eingesetzt werden. Das lineare Polysulfid weist vorzugsweise mit einem größeren Anteil, weitgehend oder sogar gänzlich eine lineare Kette mit einer Funktionalität von 2, d. h. von zwei endständigen funktionellen Gruppen, auf.

Vorzugsweise überschreitet die Dichte der Grundmasse vor Zugabe eines Härters einen Wert von 1,285 g/cm³ nicht; insbesondere weist sie einen Wert von bis zu 1,28 g/cm³ auf, besonders bevorzugt einen Wert von bis zu 1,26 g/cm³, ganz besonders bevorzugt von bis zu 1,23 g/cm³, vor allem einen Wert von bis zu 1,18 g/cm³, insbesondere einen Wert von bis zu 1,12 g/cm³.

Die Dichte z.B. des flüssigen Basispolymers kann als Reindichte nach DIN 53479 vom Juli 1976 im Pyknometer gemessen werden. Die Dichte der ausgehärteten Dichtmasse kann nach ISO 2781 vom Dezember 1988 bei Verwendung einer minimalen Menge eines Tensids in destilliertem Wasser nach dem Archimedes-Prinzip bestimmt werden. Die Dichte der ausgehärteten Dichtmasse kann, wenn sie Hohlfüllkörper enthält, im Bereich von 0,8 bis 1,29 g/cm³ liegen, vorzugsweise im Bereich von 0,85 bis 1,27 g/cm³, besonders bevorzugt im Bereich von 0,9 bis 1,24 g/cm³, vor allem im Bereich von 0,95 bis 1,20 g/cm³.

Die Zugfestigkeit wurde an Hantelprüfkörpem der ausgehärteten Dichtmasse mit der Größe des Typs 2 mit einer Zuggeschwindigkeit von 500 mm/min nach ISO 37 vom Mai 1994 in einer Universalprüfmaschine bestimmt. Die Zugfestigkeit kann mindestens 2,0 N/mm², vorzugsweise mindestens 2,05 N/mm², besonders bevorzugt mindestens 2,15 N/mm², vor allem mindestens 2,25 N/mm² (= MPa) betragen.

Die erfindungsgemäße Dichtmasse weist eine Schälfestigkeit von mindestens 125 N/25mm auf. Die Schälfestigkeit gibt die innere Festigkeit und insbesondere die Haftung auf den Substraten einer ausgehärteten Dichtmasse wieder. Sie wurde aus Proben der ausgehärteten Dichtmasse nach AITM 2-0013 mit Edelstahldrahtgewebe bestimmt.

Es wurden überraschend hohe Werte der Schälfestigkeit und zugleich hohe Werte der Zugfestigkeit erzielt, auch ohne einen Zusatz von epoxidierten Polysulfiden wie z.B. ELP-3 (genannt in US 5,663,219) einzusetzen. Wenn eine Dichtmasse mit einem epoxidierten Polysulfid (= Polysulfid mit endständigen funktionellen Epoxidgruppen, so dass keine Mercaptofunktionalität besteht) hergestellt wird, ergeben sich nach Kenntnis der Anmelderin keine positiven Einflüsse auf die Zugfestigkeit.

Überraschenderweise ergab sich aber auch, dass ohne Einsatz von Spezialpolymeren wie z.B. Permapol^{®} P-5 oder epoxidierten Polysulfiden hohe Zugfestigkeiten in Verbindung mit hohen Schälfestigkeitswerten bei niedrigen Dichten erreicht werden können. Sowohl die epoxidierten Polysulfide, als auch die Spezialpolymere wie z.B. Permapol^{®} P-5 sind jedoch erheblich teurer als die konventionellen Polysulfide, da sie einen aufwendigen zusätzlichen Produktionsschritt erfordern. Daher ist es günstig, dass für die erfindungsgemäßen Dichtmassen nicht-modifizierte Polysulfide ausreichen.

Der Anteil an leichtern polymeren festigkeitssteigerndem Füllstoff wie z.B. Polyamid, Polyethylen, Polypropylen wird vorzugsweise in Pulverform zugegeben, ggf. als Mischung von mindestens zwei verschiedenen Füllstoffen. Der mittlere Teilchendurchmesser des Füllstoffpulvers kann im Bereich von 0,5 bis 80 µm, vorzugsweise im Bereich von 1 bis 40 µm, besonders bevorzugt im Bereich von 1,2 bis 30 µm, ganz besonder bevorzugt im Bereich von 1,5 bis 20 µm liegen. Es kann vorteilhaft sein, ein Pulver einzusetzen, das z.B. durch eine Koronabehandlung oder durch eine andere aktivierende Behandlung, wie z.B. die Behandlung der Füllstoffoberfläche mit Silanen, oberflächenmodifiziert wurde. Durch die Oberflächenmodifizierung kann eine verbesserte Einbindung des polymeren Pulvers in die Dichtmasse und können somit verbesserte mechanische Eigenschaften erzielt werden. Dabei sollen funktionelle Gruppen an der Oberfläche der Pulverteilchen zur Verfügung gestellt werden, die die Einbindung in das Basispolymer Polysulfid erleichtern sollen. Der Anteil an leichtern polymeren festigkeitssteigerndem Füllstoff, soweit es keine Hohlfüllkörper sind, kann bis 35 Gew.-% betragen, wobei Hohlfüllkörper-freie Dichtmassen vorzugsweise 10 bis 25 Gew.-%, besonders bevorzugt 14 bis 22 Gew.-% aufweisen. Falls gleichzeitig mindestens je eine Art Hohlfüllkörper und leichte polymere festigkeitssteigernde Füllstoffe eingesetzt werden, liegt die Summe der Gehalte bei 0,3 bis 35 Gew.-%, vorzugsweise bei 5 bis 20 Gew.-%.

Die Dichtmasse weist ohne Anteil an Hohlfüllkörpern bevorzugt eine Dichte von nicht mehr als 1,30 g/cm³ auf. Vorzugsweise wird dabei eine Dichte von nicht mehr als 1,28 g/cm³, besonders bevorzugt eine Dichte von nicht mehr als 1,26 g/cm³ erreicht. Die Dichte der Grundmasse weist vorzugsweise ohne Anteil an Hohlfüllkörpern einen Wert von nicht mehr als 1,285 g/cm³ auf, insbesondere einen Wert von bis zu 1,28 g/cm³, vorzugsweise einen Wert von bis zu 1,27 g/cm³, ganz besonders bevorzugt von bis zu 1,25 g/cm³, vor allem einen Wert von bis zu 1,22 g/cm³, insbesondere einen Wert von bis zu 1,19 g/cm³.

Die Reindichte dieser Füllstoffe, ohne Berücksichtigung von Hohlfüllkörpern, liegt üblicherweise etwa im Bereich der zugehörigen Polymere und daher meistens im Bereich etwa von 0,8 bis 1,3 g/cm³. Die polymeren. Füllstoffpulver können eine Reindichte im Bereich von 0,5 bis 1,5 g/cm³ aufweisen. Die anorganischen Füllstoffpulver können eine Reindichte im Bereich von 0,18 bis 4,5 g/cm³ aufweisen. Letztere Pulver können unter Umständen eine geschlossene Porosität zeigen. Die Dichte der Füllstoffe, die keine Hohlfüllkörper sind, kann nach DIN 53479 vom Juli 1976 bei Verwendung einer minimalen Menge eines Tensids in entgastem demineralisierten Wasser im Pyknometer bestimmt werden.

Die Dichte der Hohlfüllkörper kann in analoger Weise ermittelt werden, jedoch unter Verwendung eines graduierten Meßzylinders mit einem eingekerbten Kolben, der auf den Wasserspiegel des die Hohlfüllkörper enthaltenden Wasservolumens zur Entfernung der enthaltenen Luft gedrückt wird, nachdem der mit dem eingekerbten Kolben geschlossene Meßzylinder zuvor zum Dispergieren der Hohlfüllkörper unter Vermeidung der Schaumbildung geschüttelt wurde.

Die erfindungsgemäße Dichtmasse kann einen Anteil an Hohlfüllkörpern wie z.B. polymere Hohlkugeln im Bereich von 0,3 bis 10 Gew.-% aufweisen. Der Anteil an Hohlfüllkörpern liegt vorzugsweise im Bereich von 0,5 bis 5 Gew.-%. Hierbei kann ein Anteil an z.B. 2 Gew.-% Hohlfüllkörpern einen Volumenanteil an der Dichtmasse je nach Art der Hohlfüllkörper etwa im Bereich von 15 bis 35 Vol.-% ausmachen. Der Zusatz an Hohlfüllkörpern hilft aufgrund der außerordentlich geringen Reindichte der Hohlfüllkörper, die Dichte der Dichtmasse relativ stark abzusenken.

Die erfindungsgemäße Dichtmasse kann Hohlfüllkörper mit einem mittleren Durchmesser von nicht mehr als 50 µm aufweisen, insbesondere solche von nicht mehr als 30 µm, gemessen unter einem Lichtmikroskop, wobei die Teilchen auf dem Objektträger weitgehend vereinzelt liegen.

Die Hohlfüllkörper können eine Reindichte im Bereich von 0,001 bis 0,8 g/cm³ aufweisen. Die Reindichte beträgt vorzugsweise 0,01 bis 0,6 g/cm³, besonders bevorzugt 0,02 bis 0,3 g/cm³. Hohlfüllkörper können grundsätzlich aus allen Materialien bestehen und ggfs. zusätzlich beschichtet sein. Vorzugsweise bestehen sie im wesentlichen aus einem keramischen Material, aus Glas oder aus einem organischen Material, wie z.B. aus einem Aluminium-haltigen Silicat. Besonders bevorzugt bestehen sie im wesentlichen aus polymerem Material z.B. auf Basis Acrylnitril-Copolymer oder Methacrylnitril-Copolymer. Die Form der Hohlfüllkörper ist vorzugsweise im wesentlichen kugelförmig. Der mittlere Durchmesser der Hohlfüllkörper liegt vorzugsweise im Bereich von 2 bis 100 µm, besonders bevorzugt im Bereich von 5 bis 45 µm.

Hierbei können Leichtfüllkörper und ggf. auch Füllstoffe mit einer mittleren Partikelgröße von nicht mehr als 30 µm, vorzugsweise von nicht mehr als 20 µm, eingesetzt werden, um eine bessere Streichbarkeit und Verformbarkeit der, Dichtmasse bei ihrer Verarbeitung zu erzielen.

Wenn der mittlere Durchmesser der Hohlfüllkörper zu groß ist, wird die Dichtmasse nicht mehr homogen zusammengesetzt sein und entsprechend inhomogene Oberflächen bei der Aushärtung ausbilden - was die Anwendbarkeit begrenzt - bzw. wird die Dichtmasse nicht die gewünschten hohen mechanischen Eigenschaften erreichen. Die Wandstärke der Hohlfüllkörper kann deutlich unterschiedliche Dicke aufweisen, ist jedoch vorzugsweise eher gering, um eine geringere Dichte der Dichtmasse zu erzeugen. Erstaunlicherweise haben sich selbst außerordentlich dünnwandige Hohlfüllkörper trotz harten mechanischen Angriffs beim Zusammenmischen der einzelnen Komponenten der Dichtmasse fast nie zerschlagen lassen. Die Hohlfüllkörper sind vorzugsweise mit Luft, bestimmten Gasen wie z.B. Stickstoff bzw. Kohlendioxid, Isobutan, n-Pentan, lsopentan oder/und anderen Restgasen des Herstellungsverfahrens gefüllt.

Die Dichte der erfindungsgemäßen Dichtmasse, die Hohlfüllkörper enthält, kann im Bereich von 1,3 bis 0,7 g/cm³ liegen, insbesondere im Bereich kleiner als 1,28 g/cm³, bevorzugt kleiner als 1,25 g/cm³, besonders bevorzugt kleiner als 1,22 g/cm³, besonders bevorzugt kleiner als 1,18 g/cm³, insbesondere kleiner als 1,12 g/cm³, vor allem kleiner als 1,06 g/cm³.

Bei geeigneter Auswahl des Basispolymers, des Haftvermittlers und der polymeren Füllstoffe ist eine Oberflächenmodifizierung der Polymerpulver nicht erforderlich, auch wenn sie förderlich sein könnte, weil aufgrund dieser Auswahl bereits ein gewisses Festigkeitsniveau erreicht wird. Bei der Zugabe von Hohlfüllkörpern ist eine Zugabe von Struktur bildenden anorganischen Füllstoffen für die Ausbildung guter mechanischer Eigenschaften dem Einsatz der polymeren Füllstoffpulver vorzuziehen. Die Oberflächeneigenschaften der polymeren Füllstoffpulver haben auf die Qualität der damit hergestellten Dichtmasse einen weit größeren Einfluß als die Auswahl der chemischen Art des Polymers der polymeren Füllstoffpulver.

Je höher die Zugfestigkeit derartiger Dichtmassen gewählt wird, desto geringer fällt jedoch meistens die Schälfestigkeit dieser Dichtmassen aus. Es wurde überraschend gefunden, dass es nur dann möglich ist, dieser entgegengesetzten Korrelation stärker zu entgehen, wenn die Dichtmasse nach dem erfindungsgemäßen Verfahren hergestellt wird.

Die Zusammensetzung der erfindungsgemäßen Dichtmasse ist ansonsten grundsätzlich bekannt. Die erfindungsgemäße Dichtmasse kann vor und nach der Aushärtung zusätzlich einen Korrosionsinhibitor enthalten, insbesondere einen chromatfreien Korrosionsinhibitor.

Für die Luft- und Raumfahrt ist die Einhaltung der Anforderungen gemäß der Spezifikationen AIMS 04-05-001 General Purpose Specification, AIMS 04-05-002 Fuel Tank Specification bzw. möglichst auch der strengeren Fuel Tank Specification AIMS-04-05-012 von großer Bedeutung. Nach Kenntnis der Anmelderin bereitet es außerordentliche Schwierigkeiten, die in der Airbus Industries Material Specification AIMS-04-05-012 geforderte Mindestzugfestigkeit von 2,0 N/mm² bestimmt nach ISO 37 vom Mai 1994 zu erfüllen. Weiterhin ist es hierbei problematisch, die Mindestschälfestigkeit der ausgehärteten Dichtmasse von 120 N/mm² nach einer eintausendstündigen Einlagerung in demineralisiertem Wasser bei 35 °C zu erreichen gemäß AIMS-04-05-012 vom November 1997 bestimmt nach AITM 2-0013 vom Juni 1995. Außerdem ist es schwierig, die Mindestschälfestigkeit der ausgehärteten Dichtmasse von 120 N/mm² nach dreimaliger jeweils einhundertstündiger Einlagerung in Flugzeugtreibstoff DERD 2494 bei 100 °C gemäß AIMS-04-05-012 bestimmt nach Airbus Industries Test Method AITM 2-0013 zu erreichen. Die meisten der erfindungsgemäßen Dichtmassen erfüllen sogar sämtliche Anforderungen aller dieser Spezifikationen. Hierzu gehört auch eine Zugfestigkeit von mindestens 2,0 N/mm² bestimmt nach ISO 37 vom Mai 1994 in Verbindung mit einer Schälfestigkeit (Peel) von mindestens 120 N/25mm bestimmt nach AITM 2-0013 vom Juni 1995 und in Verbindung mit einer Dichte bis zu 1,30 g/cm³ bestimmt nach ISO 2781 vom Dezember 1988.

Nach Kenntnis der Anmelderin gibt es bisher keine einzige gänzlich ausgehärtete Dichtmasse, die bisher alle Anforderungen der Spezifikation AIMS 04-05-001 vom November 1996 sowie auch der AIMS 04-05-012 vom November 1997, deren Anforderungen deutlich höher sind als die der AIMS 04-05-002 vom November 1996, tatsächlich erfüllt.

Die erfindungsgemäße ausgehärtete Dichtmasse kann eine Kälteflexibilität bei - 55 °C bestimmt nach ISO 1519 erfüllen. Dies wird durch Biegung eines mit Dichtmasse beschichteten Bleches über einen Dorn bestimmt, wobei die Dichtmasse rißfrei bleiben muß und wobei der Dorn einen Durchmesser von 10 mm aufweist.

Die erfindungsgemäße ausgehärtete Dichtmasse kann eine Schälfestigkeit von mindestens 120 N/mm² nach einer eintausendstündigen Einlagerung in demineralisiertem Wasser bei 35 °C aufweisen, bestimmt nach AITM 2-0013.

Die erfindungsgemäße ausgehärtete Dichtmasse kann eine Schälfestigkeit- von mindestens 120 N/mm² nach dreimaliger jeweils einhundertstündiger Einlagerung in Flugzeugtreibstoff DERD 2494 bei 100 °C aufweisen, bestimmt nach AITM 2-0013.

Die erfindungsgemäße ausgehärtete Dichtmasse kann sämtliche Anforderungen der Spezifikationen AIMS-04-05-001 und AIMS-04-05-012 erfüllen. Vorzugsweise erfüllt sie alle Anforderungen dieser Spezifikationen, wobei sie dabei auch noch etliche Grenzwerte wie die Dichte, die Zugfestigkeit und die Schälfestigkeit wie angegeben übertrifft.

Die Aufgabe wird auch gelöst durch ein Verfahren gemäß Anspruch 24 zur Herstellung einer Dichtmasse, bei dem mindestens ein Basispolymer nach Anspruch 1 mit mindestens einem Adhäsionspromotor gemischt wird und anschließend der mindestens eine Leichtfüllstoff, insbesondere Hohlfüllkörper, zugegeben wird, wobei beim Einarbeiten des Leichtfüllstoffes ein Vakuum mit einem Restdruck kleiner als 50 mbar, vorzugsweise kleiner als 10 mbar, angewandt wird.

Die anderen Füllstoffe bzw. Vernetzer und weitere Additive können jeweils teilweise oder vollständig vor oder/und nach dem Einmischen des mindestens einen Leichtfüllstoffes zugesetzt werden. Bei den anderen Füllstoffen ist es jedoch bevorzugt, dass zumindest ein Teil von ihnen erst nach dem Einmischen des mindestens einen Leichtfüllstoffes zugesetzt wird. Es kann vorteilhaft sein, wenn jene Füllstoffe, die schwer benetzbar sind oder/und eine besonders große spezifische Oberfläche aufweisen, vor der Zugabe der Leichtffillstoffe zugesetzt und mit den Polymeren vermischt werden, solche aber, die leicht benetzbar sind oder/und eine vergleichsweise kleine spezifische Oberfläche zeigen, erst nachträglich zugegeben und untergemischt werden.

Das Mischen kann grundsätzlich in einem oder in mehreren Aggregaten nacheinander erfolgen. Hierbei ist es wichtig, dass zuerst Basispolymer und Adhäsionspromotor miteinander homogen gemischt und anschließend LeichtfüHkörper zugemischt werden.-Das hierbei entstandene Gemisch muß von dem Luftgehalt möglichst vollständig befreit werden, um eine gute Benetzung und Durchmischung der Einzelkomponenten zu erzielen. Das Evakuieren kann bei Bedarf in einem anderen Aggregat erfolgen. Es ist jedoch vorteilhaft, gleichzeitig intensiv zu mischen und zu evakuieren. Um die an den Leichtfüllstoffen anhaftende Luft möglichst vollständig zu entfernen und um die LeichtEüllstoffe so gut wie möglich mit dem Basispolymer und dem Adhäsionspromotor zu benetzen. Überraschenderweise wurde gefunden, dass die mechanische Stabilität der Hohlfüllkörper so groß ist, dass sie sogar mit besonders hart und schnell angreifenden Mischaggregaten wie z.B. einem Dissolver, insbesondere einem Vakuum-Dissolver, bei einer hohen Geschwindigkeit gemischt und eingearbeitet werden können, ohne dabei zerstört zu werden.

Bei dem erfindungsgemäßen Verfahren zur Herstellung einer Dichtmasse kann das Einarbeiten des Leichtfüllstoffes in einem Vakuum-Dissolver im Labormaßstab mit einer Umfangsgeschwindigkeit der Zahnscheibe im Bereich von mindestens 2 m/s, insbesondere von mindestens 3 m/s, besonders bevorzugt im Bereich von 5 bis 15 m/s erfolgen. Bei dem erfindungsgemäßen Verfahren zur Herstellung einer Dichtmasse kann das Einarbeiten des Leichtfüllstoffes in einem. Vakuum-Dissolver im Produktionsmaßstab mit einer Umfangsgeschwindigkeit der Zahnscheibe im Bereich von mindestens 5 m/s, insbesondere von mindestens 10 m/s, besonders bevorzugt im Bereich von 12 bis 30 m/s erfolgen. Erstaunlicherweise wurden sogar die Hohlfüllkörper bei einem sehr harten Angriff im Bereich von 18 bis 22 m/s nicht zerstört, sondern so gut benetzt und homogen eingearbeitet, dass sich die mechanischen Eigenschaften der gebildeten Dichtmasse im Vergleich zu niedrigen Umfangsgeschwindigkeiten oder auch zu alternativen konventionellen Verfahrensabläufen zur Herstellung derartiger Dichtmassen deutlich verbesserten.

Bei dem erfindungsgemäßen Verfahren können anschließend die weiteren Komponenten der Dichtmasse eingebracht und untergemischt werden und ggf. dabei oder/und danach evakuiert werden.

Die erfindungsgemäße nicht-ausgehärtete bzw. ausgehärtete Dichtmasse kann insbesondere für den Bau und die Instandhaltung von Luft- und Raumfahrzeugen sowie von Automobilen und Schienenfahrzeugen, im Schiffsbau, im Apparate- und Maschinenbau, im Bauwesen oder für die Herstellung von Möbeln verwendet werden.

### Beispiele

Der Gegenstand der Erfindung wird im folgenden anhand von Ausführungsbeispielen näher erläutert.

### Allgemeine Herstellvorschrift für die Leichtdichtmassen:

Zuerst wurden die Grundpolymere Thioplast^{®} G 10 und Thiokol^{®} LP 33 sowie die Haftvermittler Methylonharz 75108 und Nafturan^{®} 8187 vorgelegt. Nach Zugabe von Leichtfüllstoffen wie z.B. Acumist^{®}, Dualite^{®}, Expancel^{®}, Rilsan^{®} oder/und Vestosint^{®} sowie von Aerosil^{®} R 202 als Struktur gebendem Füllstof wurden die Komponenten für 5 Minuten unter vollem Vakuum (< 50 mbar, möglichst < 10 mbar) am Dissolver mit einer Umfangsgeschwindigkeit von ca. 3 m/sec vermischt. Anschließend wurde die Kreide Winnofil^{®} SPT oder Polcarb^{®} S als Struktur gebender Füllstoff zugegeben und die Grundmasse für 10 Minuten mit einer Umfangsgeschwindigkeit von ca. 3 m/sec unter Vakuum (< 50 mbar, möglichst < 10 mbar) dispergiert. Das Vakuum wurde langsam angestrebt, und es wurde immer so lange gemischt, bis die Restgase weitestgehend abgezogen waren, was auch daran erkennbar war, das die Grundmasse nach starkem Volumenanstieg wieder in sich zusammengefallen war. Ist in der Rezeptur die Zugabe von demineralisiertem Wasser vorgesehen, folgte eine Abkühlphase von 5 Minuten, bei der das Material unter Kühlung und vollem Vakuum (< 50 mbar, möglichst < 10 mbar) bei einer Umfangsgeschwindigkeit von ca. 1 m/sec gerührt wurde. Im letzten Schritt wurde demineralisiertes Wasser nach dem Kühlen zugegeben und 5 Minuten bei einer Umfangsgeschwindigkeit von ca. 1 m/sec und einem Unterdruck von 400 bis 600 mbar unter erneuter Kühlung homogenisiert. Dann wurden die Grundmassen mindestens 1 Tag stehen gelassen, um einsatzbereit zu sein.

Zur Herstellung der Prüfkörper wurde die jeweilige Grundmasse mit dem Härter Naftoseal^{®} MC-238 B-2 im Verhältnis 100 : 10 versetzt und homogen vermischt, so dass hieraus eine Dichtmasse wurde. Nach der Aushärtung, d.h. nach 14 Tagen bei 23 °C und 50 % relativer Feuchte an Luft, wurden die Eigenschaften der Prüfkörper bestimmt. Die Bestimmungen wurden so wie in der Beschreibung zuvor angegeben ausgeführt.

### Versuchsserie A:

Mit dieser Versuchsserie wird der Einfluß des Herstellverfahrensganges dargestellt. Die erfindungsgemäßen Grund- bzw. Dichtmassen wurden entsprechend der oben stehenden Vorschrift hergestellt, die Vergleichsbeispiele jedoch entsprechend der konventionellen Herstellungsmethode:

**Tabelle 1: Spezifische Dichte und mittlere Partikelgrößen der eingesetzten Leichtfüllstoffe nach Herstellerangaben**

| Leichtfüllstoff | spezifische Dichte | mittlere Partikelgröße |
|---|---|---|
| | g/cm³ | µm |
| Acumist^{®} A-6 | 0,99 | 6 |
| Rilsan^{®} D 30 naturelle | 1,04 | 20- 30 |
| Vestosint^{®} 2070 | 1 - 1,2 | 5 |
| Vestosint^{®} S 7182 | 1 - 1,2 | nicht bestimmt |
| Expancel^{®} 551 DE 20 | 0,06 | 15 - 25 |
| Expancel^{®} 461 DE | 0,06 | 20 - 40 |
| Dualite^{®} 6033 | 0,13 | 25 |
| Dualite^{®} 6032 | 0,13 | 70 |
| Expancel^{®} 091 DE | 0,03 | 35-55 |

Die ersten vier Leichtfüllstoffe gehören zu der Gruppe der Polymerpulver, die übrigen zu der Gruppe der Hohlfüllkörper. Die Polymerpulver wurden in der Versuchsserie B und die Hohlfüllkörper in den Versuchsserien A und C eingesetzt. Aerosil^{®} R 202, Polcarb^{®} S und Winnofil^{®} SPT sind mineralische Füllstoffe.

**Tabelle 2: Rezepturen für ein verbessertes Herstellungsverfahren in Gew.-%**

| Rohstoff | VB 1 | VB 2 | VB 3 | VB 4 |
|---|---|---|---|---|
| 1. Thioplast^{®} G 10 | 74,78 | 74,78 | 74,78 | 74,78 |
| 2. TTMA | 0,21 | 0,21 | 0,21 | 0,21 |
| 3. Methylonharz 75108 | 1,60 | 1,60 | 1,60 | 1,60 |
| 4. Nafturan^{®} 8187 | 1,64 | 1,64 | 1,64 | 1,64 |
| 5.Polcarb ^{®} S | 18,29 | 18,29 | 18,29 | 18,29 |
| 6. Aerosim^{®} R 202 | 1,78 | 1,78 | 1,78 | 1,78 |
| 7. Expancel^{®} 1551 DE 20 | 1,68 | 1,68 | 1,68 | 1,68 |

| | | | | |
|---|---|---|---|---|
| TTMA = Trimethylolpropantrimercaptoacetat (mercaptofunktioneller Vernetzer) | | | | |

### Herstellverfahren von VB 1:

Die Grundmasse ohne Leichtfüllstoff wurde auf konventionelle Weise hergestellt, so dass erst alle flüssigen Bestandteile und danach alle Füllstoffe ohne die Leichtfüllstoffe zugegeben werden, wobei dazwischen bzw. am Ende gemischt und evakuiert wurde. Anschließend wurde der Füllstoff mit niedriger Dichte zugegeben und mit einer Umfangsgeschwindigkeit von ca. 1 m/s untergemischt. Das Material wurde dann bei einem Restdruck von ca. 200 mbar entlüftet.

### Herstellverfahren von VB 2:

Die Grundmasse ohne Leichtfüllstoff wurde wie bei B1 auf konventionelle Weise hergestellt. Anschließend wurde der Füllstoff mit niedriger Dichte zugegeben und mit einer Umfangsgeschwindigkeit von ca. 1 m/s untergemischt. Das Material wurde dann bei einem Restdruck von < 50 mbar entlüftet.

### Herstellverfahren von VB 3:

Alle Komponenten wurden eingewogen zugegeben, ohne zwischendrin zu mischen, und wurden danach bei einer Umfangsgeschwindigkeit von ca. 3 m/s und bei einem Vakuum von weit unter 50 mbar für 15 min dispergiert.

### Herstellverfahren von VB 4:

Die Herstellung erfolgte derart dass das Basispolymer auf der Basis von langkettigem linearen Polysulfid Thioplast^{®} G 10 mit den Adhäsionspromotoren Methylonharz 75108 und Nafturan^{®} 8187 zugegeben und gemischt wurde und anschließend der Leichtfüllstoff Expancel^{®} 551 DE 20 (= Hohlfüllkörper) sowie der Füllstoff Aerosil^{®} R 202 zugegeben wurde, wobei beim Einarbeiten des Leichtfüllstoffes ein Vakuum mit einem Restdruck weitaus kleiner als 50 mbar und eine Umfangsgeschwindigkeit von ca. 3 m/s angewandt wurde. Danach wurden die restlichen Bestandteile (siehe Tabelle 2) zugegeben und unter Vakuum von weitaus kleiner als 50 mbar und mit einer Umfangsgeschwindigkeit von ca. 3 m/s gemischt.

**Tabelle 3: Ergebnisse der Bestimmungen an den ausreagierten Dichtmassen für ein verbessertes Herstellungsverfahren**

| Prufung | VB 1 | VB 2 | VB 3 | VB 4 |
|---|---|---|---|---|
| Dichte [g/cm³] | 1,06 | 1,08 | 1,10 | 1,09 |
| Zugfestigkeit [N/mm²] | 1,95 | 2,34 | 2,35 | 2,39 |
| Dehnung [%] | 291 | 381 | 413 | 413 |
| Peel 14 d RT [N/25mm] | 178 | 188 | 195 | 224 |

Bei diesen Versuchen konnte gezeigt werden, dass VB 4, welche auch vom Herstellverfahren und nicht nur von den Eigenschaften der ausgehärteten Dichtmasse her erfindungsgemäß ist, innerhalb der Versuchsserie A-die besten physikalischen Eigenschaften unter den ausgehärteten Dichtmassen erreichte.

Überraschenderweise hatte das Herstellungsverfahren, vor allem der hohe Unterdruck und die intensive Benetzung der Leichtfüllstoffe mit dem Basispolymer und mit dem Adhäsionspromotor, einen signifikanten Einfluß auf die Eigenschaften der ausgehärteten Dichtmassen.

### Versuchsserie B:

Mit dieser Versuchsserie wird die Herstellung von Grund- bzw. Dichtmassen unter Anwendung von polymeren Pulvern als Leichtfüllstoffen dargestellt. Die Herstellung der Dichtmassen erfolgte nach der Herstellvorschrift analog zu VB 4, wobei teilweise andere chemische Bestandteile verwendet wurden.

**Tabelle 4: Rezepturen unter Verwendung von polymeren Leichtfolistoffen mit Zugabemengen in Gew.-%**

| Rohstoff | B5 | B6 | B7 | B8 | VB 5 |
|---|---|---|---|---|---|
| Thioplast^{®} G 10 | 50,11 | 52,00 | 49,67 | 51,81 | 49,57 |
| Thiokol^{®} LP 33 | 20,00 | 17,48 | 19.87 | 17,41 | 19,84 |
| Methylonharz 75108 | 1,62 | 1,62 | 1,84 | 1,61 | 1,61 |
| Nafturan^{®} 8187 | 1,50 | 1,50 | 1,49 | 1,49 | 1,49 |
| Acumist^{®} A-6 | 8,50 | 17,00 | - | - | - |
| Rilsan^{®} D 30 naturelle | 9,80 | - | 19,58 | - | - |
| Vestosint^{®} 2070 | - | - | - | 16,93 | - |
| Vestosint^{®} S 7182 | - | - | - | - | 19,84 |
| Winnofil® SPT | 7,70 | 9,00 | 6,16 | 8,96 | 5,46 |
| Aerosil^{®} R 202 | 1,40 | 1,40 | 1,39 | 1,39 | 1,79 |
| Wasser | - | - | - | 0,40 | 0,40 |

Thiokol^{®} LP 33 ist ein kurzkettiges -verzweigtes Polysulfid-Basispolymer. Als Wasser wurde immer deionisiertes Wasser eingesetzt.

**Tabelle 5: Ergebnisse der Bestimmungen an den ausreagierten Dichtmassen, die entsprechend den Rezepturen der Tabelle 4 hergestellt wurden**

| Prüfung | B 5 | B 6 | B 7 | B 8 | VB 5 |
|---|---|---|---|---|---|
| Dichte [g/cm³] | 1,28 | 1,26 | 1,30 | 1,30 | 1,32 |
| Zugfestigkeit [N/mm²] | 2,24 | 2,10 | 2,41 | 2,00 | 1,76 |
| Dehnung [%] | 285 | 288 | 282 | 283 | 292 |
| Peel 14 d RT [N/25mm] | 190 | 263 | 126 | 262 | 135 |

Es war überraschend, dass trotz der vergleichsweise geringen Anteile an verstärkenden mineralischen Füllstoffen (Aerosil^{®} R 202 bzw. Winnofil^{®} SPT) hohe Zugfestigkeiten erreicht werden konnten.

Überraschenderweise ergab sich, dass darüber hinaus auch die nur mit geringen Anteilen an verstärkenden mineralischen Füllstoffen und ansonsten mit. Polymerpulvern gefüllten Dichtmassen gute Haftung auf verschiedensten Substraten (Metalle, Lacke unterschiedlichster Art) in Verbindung mit hohen mechanischen Kennwerten erbrachten.

Obwohl das Basispolymer eine Dichte von ca. 1,28 g/cm³ besaß, ergab sich erwartungsgemäß bei den erfindungsgemäßen Beispielen der Versuchsserie B auch ohne den Einsatz von Hohlfüllkörpern eine Dichte der Dichtmasse von ≤ 1,30 g/cm³.

### Versuchsserie C:

Mit dieser Versuchsserie wird die Herstellung von Grund- bzw. Dichtmassen unter Anwendung von polymeren Hohlfüllkörpern als Leichtfolistoffe dargestellt. Die Herstellung der Dichtmassen erfolgte nach der Herstellvorschrift analog zu VB 4, wobei teilweise andere chemische Bestandteile verwendet wurden.

**Tabelle 6: Rezepturen unter Verwendung von polymeren Hohlfüllkörpern mit Zugabemengen in Gew.-%**

| Rohstoff | B 9 | B 10 | VB 8 | VB 9 | B 13 | VB 6 | VB 7 |
|---|---|---|---|---|---|---|---|
| Thioplas^{®} G 10 | 50,11 | 55,65 | 55,38 | 54,01 | 74,78 | 54,01 | 55,80 |
| Thiokol^{®} LP 33 | 20,00 | 19,95 | 19,85 | 19,36 | - | 19,36 | 20,00 |
| TPTMP | - | - | - | - | 0,23 | - | - |
| Methylonharz 75108 | 1,62 | 1,62 | 1,61 | 1,57 | 1,60 | 1,57 | 1,62 |
| Nafturan^{®} 8187 | 1,00 | 1,30 | 1,49 | 1,45 | 1,64 | 1,45 | 1,50 |
| Expancel^{®} 551 DE 20 | 0,78 | 1,60 | - | - | 1,68 | - | - |
| Expancel^{®} 461 DE | - | - | 1,69 | - | - | - | - |
| Dualite^{®} 6033 | - | - | - | 4,13 | - | - | - |
| Duallte^{®} 6032 | - | - | - | - | - | 4,13 | - |
| Expancel^{®} 091 DE | - | - | - | - | - | - | 0,75 |
| Winnofil^{®} SPT | 16,20 | 18,42 | 18.33 | 17,88 | - | 17,88 | 18,87 |
| Polcarb^{®} S | - | - | - | - | 18,29 | - | - |
| Aerosil^{®} R 202 | 1,40 | 1,46 | 1,45 | 1,41 | 1,78 | 1,41 | 1,46 |
| Wasser | - | - | 0,20 | 0,19 | - | 0,19 | - |

| | | | | | | | |
|---|---|---|---|---|---|---|---|
| TPTMP = Trimethylolpropantrimercaptopropionat, mercaptofunktioneller Vernetzer | | | | | | | |

**Tabelle 7: Ergebnisse der Bestimmungen an den ausreagierten Dichtmassen, die entsprechend den Rezepturen der Tabelle 6 hergestellt wurden**

| Prüfung | B 9 | B 10 | VB 8 | VB 9 | B 13 | VB 6 | VB 7 |
|---|---|---|---|---|---|---|---|
| Dichte [g/cm³] | 1,29 | 1,09 | 1,08 | 1,15 | 1,09 | 1,12 | 1,06 |
| Zugfestigkeit [N/mm²] | 2,64 | 2,55 | 2,26 | 2,21 | 2,07 | 1,58 | 1,80 |
| Dehnung [%] | 389 | 307 | 280 | 275 | 472 | 286 | 426 |
| Peel 14 d RT [N/25mm] | 209 | 125 | 97 | 94 | 204 | 209 | 254 |

Es wurde ein Zusammenhang zwischen der Partikelgröße der Leichtfüllkörper und den mechanischen Eigenschaften der damit hergestellten Dichtmassen festgestellt. So zeigte sich, dass mit sinkenden mittleren Partikelgrößen eine steigende Zugfestigkeit einhergeht. Vorzugsweise liegt die mittlere Partikelgröße der Hohlfüllkörper nicht über 40 µm. Anteil und Art der Hohlfüllkörper und der mineralischen Füllstoffe beeinflussen die mechanischen Eigenschaften wesentlich.

Überraschenderweise konnten ausgehärtete Dichtmassen hergestellt werden, die hervorragende mechanische Eigenschaften aufweisen und trotzdem eine außerordentlich geringe Dichte, zum Teil von weniger als 1,2 g/cm³, zeigen.

## Patentansprüche

1. Grundmasse auf Basis Schwefel enthaltender Polymere zur Herstellung einer Dichtmasse nach einem der Ansprüche 11 bis 23, **dadurch gekennzeichnet, dass** sie als Basispolymer mindestens ein langkettiges lineares Polysulfid mit einer Kettenlänge im Bereich etwa von 1500 bis 5000 g/Mol in Kombination mit mindestens einem kurzkettigen verzweigten Polysulfid mit einer Kettenlänge im Bereich etwa von 500 bis 2000 g/Mol, das einen Gehalt trifunktioneller oder/und höher-funktioneller Moleküle aufweist, und gegebenenfalls mit mindestens einem mehrfach funktionellen Vernetzer mit der Anzahl der funktionellen Gruppen n ≥ 3 aufweist, jedoch keine epoxidierten Polysulfide, sowie einen Anteil an Hohlfüllkörpern oder/und an leichtem polymeren festigkeitssteigerndem Füllstoff wie z.B. Polyamid, Polyethylen, Polypropylen enthält.

2. Grundmasse nach Anspruch 1, **dadurch gekennzeichnet, dass** sie vor Zugabe eines Härters einen Wert der Dichte von nicht mehr als 1,285 g/cm³ aufweist.

3. Grundmasse nach Anspruch 1 oder 2, **dadurch gekennzeichnet, dass** sie einen Anteil an Hohlfüllkörper wie z.B. polymere Hohlkugeln im Bereich von 0,3 bis 10 Gew.-% aufweist.

4. Grundmasse nach einem der Ansprüche 1 bis 3, **dadurch gekennzeichnet, dass** das mindestens eine kurzkettige verzweigte Polysulfid einen Gehalt trifunktioneller Moleküle im Bereich von 0,1 bis 5 Mol-% aufweist.

5. Grundmasse nach einem der vorstehenden Ansprüche 1 bis 4, **dadurch gekennzeichnet, dass** sie ohne Anteil an Hohlfüllkörpern eine Dichte von nicht mehr als 1,285 g/cm³ aufweist.

6. Grundmasse nach einem der vorstehenden Ansprüche 1 bis 5, **dadurch gekennzeichnet, dass** sie Hohlfüllkörper mit einem mittleren Durchmesser von nicht mehr als 50 µm aufweist, insbesondere von nicht mehr als 30 µm.

7. Grundmasse nach einem der vorstehenden Ansprüche 1 bis 6, **dadurch gekennzeichnet, dass** die Hohlfüllkörper eine Reindichte im Bereich von 0,001 bis 0,8 g/cm³ aufweisen.

8. Grundmasse nach einem der vorstehenden Ansprüche 1 bis 7, **dadurch gekennzeichnet, dass** die polymeren Füllstoffpulver eine Reindichte im Bereich von 0,5 bis 1,5 g/cm³ aufweisen.

9. Grundmasse nach einem der vorstehenden Ansprüche 1 bis 8, **dadurch gekennzeichnet, dass** die anorganischen Füllstoffpulver eine Reindichte im Bereich von 0,18 bis 4,5 g/cm³ aufweisen.

10. Grundmasse nach einem der vorstehenden Ansprüche 1 bis 9, **dadurch gekennzeichnet, dass** sie zusätzlich einen Korrosionsinhibitor enthält, insbesondere einen chromatfreien Korrosionsinhibitor.

11. Dichtmasse niedriger Dichte und erhöhter Zugfestigkeit auf Basis Schwefel enthaltender Polymere, **dadurch gekennzeichnet, dass** sie aus einer Grundmasse nach einem der Ansprüche 1 bis 10 und unter Anmischen mit Härter hergestellt ist und dass sie nach dem Aushärten eine Dichte von nicht mehr als 1,3 g/cm³ bestimmt nach ISO 2781, eine Zugfestigkeit von mindestens 1,9 N/mm² bestimmt nach ISO 37 und eine Schälfestigkeit (Peel) bestimmt nach AITM 2-0013 mit Edelstahldrahtgewebe von mindestens 125 N/25mm aufweist.

12. Dichtmasse nach Anspruch 11, **dadurch gekennzeichnet, dass** sie einen Anteil an Hohlfüllkörper wie z.B. polymere Hohlkugeln im Bereich von 0,3 bis 10 Gew.-% aufweist.

13. Dichtmasse nach Anspruch 11 oder 12, **dadurch gekennzeichnet, dass** sie einen Anteil an leichtem polymeren festigkeitssteigerndem Füllstoff wie z.B. Polyamid, Polyethylen, Polypropylen enthält.

14. Dichtmasse nach einem der Ansprüche 11 bis 13, **dadurch gekennzeichnet, dass** sie ohne Anteil an Hohlfüllkörpern eine Dichte von nicht mehr als 1,30 g/cm³ aufweist.

15. Dichtmasse nach einem der Ansprüche 11 bis 14, **dadurch gekennzeichnet, dass** sie Hohlfüllkörper mit einem mittleren Durchmesser von nicht mehr als 50 µm aufweist, insbesondere von nicht mehr als 30 µm.

16. Dichtmasse nach einem der Ansprüche 11 bis 15, **dadurch gekennzeichnet, dass** die Hohlfüllkörper eine Reindichte im Bereich von 0,001 bis 0,8 g/cm³ aufweisen.

17. Dichtmasse nach einem der Ansprüche 11 bis 16, **dadurch gekennzeichnet, dass** die polymeren Füllstoffpulver eine Reindichte im Bereich von 0,5 bis 1,5 g/cm³ aufweisen.

18. Dichtmasse nach einem der Ansprüche 11 bis 17, **dadurch gekennzeichnet, dass** die anorganischen Füllstoffpulver eine Reindichte im Bereich von 0,18 bis 4,5 g/cm³ aufweisen.

19. Dichtmasse nach einem der Ansprüche 11 bis 18, **dadurch gekennzeichnet, dass** sie zusätzlich einen Korrosionsinhibitor enthält, insbesondere einen chromatfreien Korrosionsinhibitor.

20. Dichtmasse nach einem der Ansprüche 11 bis 19, **dadurch gekennzeichnet, dass** sie eine Kälteflexibilität bei - 55 °C bestimmt nach ISO 1519 erfüllt.

21. Dichtmasse nach einem der Ansprüche 11 bis 20, **dadurch gekennzeichnet, dass** sie eine Schälfestigkeit der ausgehärteten Dichtmasse von mindestens 120 N/mm² nach einer eintausendstündigen Einlagerung in demineralisiertem Wasser bei 35 °C aufweist, bestimmt nach AITM 2-0013.

22. Dichtmasse nach einem der Ansprüche 11 bis 21, **dadurch gekennzeichnet, dass** sie eine Schälfestigkeit der ausgehärteten Dichtmasse von mindestens 120 N/mm² nach dreimaliger jeweils einhundertstündiger Einlagerung in Flugzeugtreibstoff DERD 2494 bei 100 °C aufweist, bestimmt nach AITM 2-0013.

23. Dichtmasse nach einem der Ansprüche 11 bis 22, **dadurch gekennzeichnet, dass** sie sämtliche Anforderungen der Spezifikationen AIMS-04-05-001 und AIMS-04-05-012 erfüllt.

24. Verfahren zur Herstellung einer Dichtmasse nach einem der Ansprüche 11 bis 23, **dadurch gekennzeichnet, dass** mindestens ein Basispolymer nach Anspruch 1 mit mindestens einem Adhäsionspromotor gemischt wird und anschließend der mindestens eine Leichtfüllstoff, insbesondere Hohlfüllkörper, zugegeben wird, wobei beim Einarbeiten des Leichtfüllstoffes ein Vakuum mit einem Restdruck kleiner als 50 mbar angewandt wird.

25. Verfahren zur Herstellung einer Dichtmasse nach Anspruch 24, **dadurch gekennzeichnet, dass** das Einarbeiten des Leichtfüllstoffes in einem Vakuum-Dissolver mit einer Umfangsgeschwindigkeit der Zahnscheibe im Bereich von mindestens 2 m/s, insbesondere von mindestens 5 m/s, besonders bevorzugt im Bereich von 12 bis 30 m/s erfolgt.

26. Verfahren zur Herstellung einer Dichtmasse nach Anspruch 24 oder 25, **dadurch gekennzeichnet, dass** anschließend die weiteren Komponenten der Dichtmasse eingebracht und untergemischt werden und ggf. dabei oder/und danach evakuiert werden.

27. Verfahren zur Herstellung einer Dichtmasse nach einem der Ansprüche 24 bis 26, **dadurch gekennzeichnet, dass** Leichtfüllkörper und ggf. auch Füllstoffe mit einer mittleren Partikelgröße von nicht mehr als 30 µm, vorzugsweise von nicht mehr als 20 µm, eingesetzt werden, um eine bessere Streichbarkeit und Verformbarkeit der Dichtmasse bei ihrer Verarbeitung zu erzielen.

28. Verfahren zur Herstellung einer Dichtmasse nach einem der Ansprüche 24 bis 27, **dadurch gekennzeichnet, dass** als Basispolymer mindestens ein langkettiges lineares Polysulfid mit einer Kettenlänge im Bereich etwa von 1500 bis 5000 g/Mol mit mindestens einem kurzkettigen verzweigten Polysulfid mit einer Kettenlänge im Bereich etwa von 500 bis 2000 g/Mol, das einen Gehalt trifunktioneller oder/und höher-funktioneller Moleküle aufweist, insbesondere im Bereich von 0,1 bis 5 Gew.-%, und gegebenenfalls mit mindestens einem mehrfach funktionellen Vernetzer mit der Anzahl der funktionellen Gruppen n ≥ 3 gemischt werden.

29. Verwendung der nach dem Verfahren gemäß den Ansprüchen 24 bis 28 hergestellten Produkte für den Bau und die Instandhaltung von Luft- und Raumfahrzeugen sowie von Automobilen und Schienenfahrzeugen, im Schiffsbau, im Apparate- und Maschinenbau, im Bauwesen oder für die Herstellung von Möbeln.

## Claims

1. A base composition based on sulfur-containing polymers for the manufacture of a sealing composition according to one of claims 11 to 23, **characterised in that** it contains as a base polymer at least one long-chain linear polysulfide with a chain length in the range of about 1500 to 5000 g/mol in combination with at least one short-chain branched polysulfide with a chain length in the range of about 500 to 2000 g/mol, having a content of trifunctional and/or higher-functional molecules, and optionally with at least one polyfunctional crosslinker having the number of functional groups n ≥ 3, but not an epoxidated polysulfide, and also a proportion of hollow filling bodies and/or of lightweight polymeric strength-increasing fillers such as e.g. polyamide, polyethylene, polypropylene.

2. A base composition according to claim 1, **characterised in that** it has a density value of not more than 1.285 g/cm³ before the addition of a hardener.

3. A base composition according to claim 1 or 2, **characterised in that** it has a proportion of hollow filling bodies such as e.g. polymeric hollow spheres in the range of 0.3 to 10 wt.%.

4. A base composition according to one of claims 1 to 3, **characterised in that** the at least one short-chain, branched polysulfide has a content of trifunctional molecules in the range of 0.1 to 5 mol.%.

5. A base composition according to one of the preceding claims 1 to 4, **characterised in that**, without a proportion of hollow filling bodies, it has a density of not more than 1.285 g/cm³.

6. A base composition according to one of the preceding claims 1 to 5, **characterised in that** it has hollow filling bodies with an average diameter of not more than 50 µm, in particular of not more than 30 µm.

7. A base composition according to one of the preceding claims 1 to 6, **characterised in that** the hollow filling bodies have a true density in the range of 0.001 to 0.8 g/cm³.

8. A base composition according to one of the preceding claims 1 to 7, **characterised in that** the polymeric filler powders have a true density in the range of 0.5 to 1.5 g/cm³.

9. A base composition according to one of the preceding claims 1 to 8, **characterised in that** the inorganic filler powders have a true density in the range of 0.18 to 4.5 g/cm³.

10. A base composition according to one of the preceding claims 1 to 9, **characterised in that** it additionally contains a corrosion inhibitor, in particular a chromate-free corrosion inhibitor.

11. A low-density, high-tensile-strength sealing composition based on sulfur-containing polymers, **characterised in that** it is manufactured from a base composition according to one of claims 1 to 10 whilst mixing with hardener and that it has a density after curing of not more than 1.3 g/cm³ determined according to ISO 2781, a tensile strength of at least 1.9 N/mm² determined according to ISO 37 and a peel strength of at least 125 N/25 mm determined according to AITM 2-0013 with stainless-steel wire fabric.

12. A sealing composition according to claim 11, **characterised in that** it has a proportion of hollow filling bodies such as e.g. polymeric hollow spheres in the range of 0.3 to 10 wt.%.

13. A sealing composition according to claim 11 or 12 **characterised in that** it contains a proportion of lightweight polymeric strength-increasing filler such as e.g. polyamide, polyethylene, polypropylene.

14. A sealing composition according to one of claims 11 to 13, **characterised in that**, without a proportion of hollow filling bodies, it has a density of not more than 1.30 g/cm³.

15. A sealing composition according to one of claims 11 to 14, **characterised in that** it has hollow filling bodies with an average diameter of not more than 50 µm, in particular of not more than 30 µm.

16. A sealing composition according to one of claims 11 to 15, **characterised in that** the hollow filling bodies have a true density in the range of 0.001 to 0.8 g/cm³.

17. A sealing composition according to one of claims 11 to 16, **characterised in that** the polymeric filler powders have a true density in the range of 0.5 to 1.5 g/cm³.

18. A sealing composition according to one of claims 11 to 17, **characterised in that** the inorganic filler powders have a true density in the range of 0.18 to 4.5 g/cm³.

19. A sealing composition according to one of claims 11 to 18, **characterised in that** it additionally contains a corrosion inhibitor, in particular a chromate-free corrosion inhibitor.

20. A sealing composition according to one of claims 11 to 19, **characterised in that** it fulfils low-temperature flexibility at -55°C determined to ISO 1519.

21. A sealing composition according to one of claims 11 to 20, **characterised in that** it has a peel strength of the cured sealing composition of at least 120 N/mm² after one thousand hours' immersion in demineralised water at 35°C, determined to AITM 2-0013.

22. A sealing composition according to one of claims 11 to 21, **characterised in that** it has a peel strength of the cured sealing composition of at least 120 N/mm² after three periods of one hundred hours each of immersion in jet fuel DERD 2494 at 100°C, determined to AITM 2-0013.

23. A sealing composition according to one of claims 11 to 22, **characterised in that** it fulfils all requirements of the specifications AIMS-04-05-001 and AIMS-04-05-012.

24. A process for the manufacture of a sealing composition according to one of claims 11 to 23, **characterised in that** at least one base polymer according to claim 1 is mixed with at least one adhesion promoter and the at least one lightweight filler, in particular hollow filling bodies, is then added, a vacuum with a residual pressure of less than 50 mbar being applied during incorporation of the lightweight filler.

25. A process for the manufacture of a sealing composition according to claim 24, **characterised in that** the lightweight filler is incorporated in a vacuum dissolver at a peripheral speed of the toothed disc in the range of at least 2 m/s, in particular of at least 5 m/s, particularly preferably in the range of 12 to 30 m/s.

26. A process for the manufacture of a sealing composition according to claim 24 or 25, **characterised in that** the other components of the sealing composition are then incorporated and intermixed, evacuation optionally being carried out during or after this process.

27. A process for the manufacture of a sealing composition according to one of claims 24 to 26, **characterised in that** lightweight filling bodies and optionally also fillers with an average particle size of not more than 30 µm, preferably of not more than 20 µm are used, in order to achieve better spreadability and mouldability of the sealing composition during working.

28. A process for the manufacture of a sealing composition according to one of claims 24 to 27, **characterised in that** as a base polymer at least one long-chain linear polysulfide with a chain length in the range of about 1500 to 5000 g/mol is mixed with at least one short-chain branched polysulfide with a chain length in the range of about 500 to 2000 g/mol, which has a content of trifunctional and/or higher-functional molecules, in particular in the range of 0.1 to 5 wt.%, and optionally with at least one polyfunctional crosslinker having the number of functional groups n ≥ 3.

29. Use of the products manufactured by the process according to claims 24 to 28 for the construction and maintenance of air- and space craft and of motor vehicles and rail vehicles, in shipbuilding, in equipment and mechanical engineering, in construction and civil engineering or for the manufacture of furniture.

## Revendications

1. Masse primaire à base de polymères soufrés, servant à préparer une masse d'étanchéité conforme à l'une des revendications 11 à 23, **caractérisée en ce qu'**elle contient, en tant que polymère de base, au moins un polysulfure linéaire à longue chaîne, dont la longueur de chaîne correspond à une masse d'à peu près 1500 à 5000 g/mol, en combinaison avec au moins un polysulfure ramifié à courte chaîne, dont la longueur de chaîne correspond à une masse d'à peu près 500 à 2000 g/mol, lequel présente une certaine teneur en molécules trifonctionnelles et/ou supra-fonctionnelles, et facultativement avec au moins un agent de réticulation polyfonctionnel qui comporte des groupes fonctionnels en un nombre n supérieur ou égal à 3, mais aucun polysulfure époxydé, ainsi qu'une certaine proportion de corps creux de charge et/ou de charge polymère légère et renforçante, comme par exemple un polyamide, un polyéthylène ou un polypropylène.

2. Masse primaire conforme à la revendication 1, **caractérisée en ce qu'**elle présente, avant l'addition d'un durcisseur, une masse volumique ne valant pas plus de 1,285 g/cm³.

3. Masse primaire conforme à la revendication 1 ou 2, **caractérisée en ce qu'**elle contient 0,3 à 10 % en poids de corps creux de charge, comme par exemple des sphères creuses en polymère.

4. Masse primaire conforme à l'une des revendications 1 à 3, **caractérisée en ce que** ledit polysulfure ramifié à courte chaîne au nombre d'au moins un comporte 0,1 à 5 % en moles de molécules trifonctionnelles.

5. Masse primaire conforme à l'une des revendications 1 à 4 précédentes, **caractérisée en ce qu'**elle présente, sans corps creux de charge, une masse volumique ne valant pas plus de 1,285 g/cm³.

6. Masse primaire conforme à l'une des revendications 1 à 5 précédentes, **caractérisée en ce qu'**elle contient des corps creux de charge dont le diamètre moyen vaut au plus 50 µm, en particulier au plus 30 µm.

7. Masse primaire conforme à l'une des revendications 1 à 6 précédentes, **caractérisée en ce que** les corps creux de charge présentent une masse volumique absolue de 0,001 à 0,8 g/cm³.

8. Masse primaire conforme à l'une des revendications 1 à 7 précédentes, **caractérisée en ce que** la charge polymère en poudre présente une masse volumique absolue de 0,5 à 1,5 g/cm³

9. Masse primaire conforme à l'une des revendications 1 à 8 précédentes, **caractérisée en ce que** la charge inorganique en poudre présente une masse volumique absolue de 0,18 à 4,5 g/cm³.

10. Masse primaire conforme à l'une des revendications 1 à 9 précédentes, **caractérisée en ce qu'**elle contient en outre un inhibiteur de corro-sion, en particulier un inhibiteur de corrosion sans chromate.

11. Masse d'étanchéité, présentant une faible densité et une résistance renforcée à la traction, à base de polymères soufrés, **caractérisée en ce qu'**on la prépare à partir d'une masse primaire conforme à l'une des revendications 1 à 10, en ajoutant et mélangeant un durcisseur à celle-ci, et **en ce qu'**elle présente après durcissement une masse volumique, mesurée selon la norme ISO 2781, d'au plus 1,3 g/cm³, une résistance à la traction, mesurée selon la norme ISO 37, d'au moins 1,9 N/mm², et une résistance au pelage, mesurée selon le procédé AITM 2-0013 à l'aide d'un tissu de fils en acier spécial, d'au moins 125 N/25 mm.

12. Masse d'étanchéité conforme à la revendication 11, **caractérisée en ce qu'**elle contient des corps creux de charge, comme par exemple des sphères creuses en polymère, en une proportion pondérale de 0,3 à 10 %.

13. Masse d'étanchéité conforme à la revendication 11 ou 12, **caractérisée en ce qu'**elle contient une certaine proportion de charge polymère légère et renforçante, comme par exemple un polyamide, un polyéthylène ou un polypropylène.

14. Masse d'étanchéité conforme à l'une des revendications 11 à 13, **caractérisée en ce qu'**elle présente, sans corps creux de charge, une masse volumique ne valant pas plus de 1,30 g/cm ³.

15. Masse d'étanchéité conforme à l'une des revendications 11 à 14, **caractérisée en ce qu'**elle contient des corps creux de charge dont le diamètre moyen vaut au plus 50 µm, en particulier au plus 30 µm.

16. Masse d'étanchéité conforme à l'une des revendications 11 à 15, **caractérisée en ce que** les corps creux de charge présentent une masse volumique absolue de 0,001 à 0,8 g/cm³.

17. Masse d'étanchéité conforme à l'une des revendications 11 à 16, **caractérisée en ce que** la charge polymère en poudre présente une masse volumique absolue de 0,5 à 1,5 g/cm³.

18. Masse d'étanchéité conforme à l'une des revendications 11 à 17, **caractérisée en ce que** la charge inorganique en poudre présente une masse volumique absolue de 0,18 à 4,5 g/cm ³.

19. Masse d'étanchéité conforme à l'une des revendications 11 à 18, **caractérisée en ce qu'**elle contient en outre un inhibiteur de corrosion, en particulier un inhibiteur de corrosion sans chromate.

20. Masse d'étanchéité conforme à l'une des revendications 11 à 19, **caractérisée en ce qu'**elle présente une flexibilité à froid, mesurée selon la norme ISO 1519, satisfaisante à -55 °C.

21. Masse d'étanchéité conforme à l'une des revendications 11 à 20, **caractérisée en ce qu'**elle présente, à l'état durci, une résistance au pelage, mesurée, selon le procédé AITM 2-0013, après un séjour de 1000 heures à 35 °C dans de l'eau déminéralisée, d'au moins 120 N/mm².

22. Masse d'étanchéité conforme à l'une des revendications 11 à 21, **caractérisée en ce qu'**elle présente, à l'état durci, une résistance au pelage, mesurée, selon le procédé AITM 2-0013, après trois séjours de 100 heures chacun à 100 °C dans du carburant pour avion DERD 2494, d'au moins 120 N/mm²

23. Masse d'étanchéité conforme à l'une des revendications 11 à 22, **caractérisée en ce qu'**elle satisfait à toutes les exigences des spécifications AIMS-04-05-001 et AIMS-04-05-012.

24. Procédé de fabrication d'une masse d'étanchéité conforme à l'une des revendications 11 à 23, **caractérisé en ce qu'**on mélange au moins un polymère de base, du type indiqué dans la revendication 1, avec au moins un promoteur d'adhésion, et l'on ajoute ensuite au moins une charge légère, en particulier des corps creux de charge, en appliquant, lors de l'incorporation de la charge légère, un vide tel que la pression résiduelle est inférieure à 50 mbar.

25. Procédé de fabrication d'une masse d'étanchéité, conforme à la revendication 24, **caractérisé en ce que** l'on effectue l'incorporation de la charge légère dans un appareil de dissolution sous vide, en faisant tourner le disque denté à une vitesse circonférentielle d'au moins 2 m/s, en particulier d'au moins 5 m/s, et surtout de 12 à 30 m/s.

26. Procédé de fabrication d'une masse d'étanchéité, conforme à la revendication 24 ou 25, **caractérisé en ce qu'**ensuite, on incorpore et on mélange les autres composants de la masse d'étanchéité, et le cas échéant, pendant et/ou après cela, on met le tout sous vide.

27. Procédé de fabrication d'une masse d'étanchéité, conforme à l'une des revendications 24 à 26, **caractérisé en ce que** l'on ajoute des corps de charge légère, ainsi que, le cas échéant, des charges en particules dont la taille moyenne vaut au plus 30 µm et de préférence au plus 20 µm, pour pouvoir mieux étaler et façonner la masse d'étanchéité, lors de sa mise en oeuvre.

28. Procédé de fabrication d'une masse d'étanchéité, conforme à l'une des revendications 24 à 27, **caractérisé en ce que** l'on mélange, en tant que polymère de base, au moins un polysulfure linéaire à longue chaîne, dont la longueur de chaîne correspond à une masse d'à peu près 1500 à 5000 g/mol, avec au moins un polysulfure ramifié à courte chaîne, dont la longueur de chaîne correspond à une masse d'à peu près 500 à 2000 g/mol, lequel présente une certaine teneur en molécules trifonctionnelles et/ou supra-fonctionnelles, et en contient en particulier 0,1 à 5 % en poids, et facultativement avec au moins un agent de réticulation polyfonctionnel qui comporte des groupes fonctionnels en un nombre n supérieur ou égal à 3.

29. Emploi d'un produit fabriqué selon un procédé conforme à l'une des revendications 24 à 28, dans la construction et la maintenance de véhicules aériens ou spatiaux, d'automobiles ou de véhicules sur rails, dans la construction de navires, dans la construction d'appareils ou de machines, dans la construction de bâtiments, ou dans la fabrication de meubles.
